# EUROPÄISCHE PATENTSCHRIFT

(11) **EP 0 683 971 B1**
(45) Veröffentlichungstag und Bekanntmachung des Hinweises auf die Patenterteilung: **05.04.2000**
(21) Anmeldenummer: 95106486.4
(22) Anmeldetag: 28.04.1995
(51) Int. Cl.: A01F 29/20

(54) **Häckselmesser und Häckselrotor**
Chaff cutter and chaff-cutter drum
Couteau hache-paille et rotor de hachoir

(30) Priorität: 28.05.1994 DE 4418697
(43) Veröffentlichungstag der Anmeldung: 29.11.1995
(73) Patentinhaber: DEERE & COMPANY, Moline, Illinois 61265-8098 (US)
(72) Erfinder: Leeb, Georg Wilhelm, D-68519 Viernheim (DE); Klingler, Alban, D-66453 Gersheim (DE)
(74) Vertreter: Feldmann, Bernhard

(56) Entgegenhaltungen:
- DE-A- 2 737 683
- DE-A- 4 007 794
- DE-U- 8 813 953
- FR-A- 1 473 506
- FR-A- 2 554 309
- GB-A- 1 559 322
- GB-A- 2 161 065
- US-A- 3 797 766
- US-A- 4 257 566

## Beschreibung

Die Erfindung betrifft ein Häckselmesser mit einem Befestigungsflansch und einem Trennbereich, der in einer Schnittkante ausläuft, und einen Häckselrotor mit einer geschlossenen Trommel und auf deren Mantelfläche in mehreren Ringreihen parallel zu der Drehachse der Trommel aufgesetzten Messerhaltern.

Die DE-C2-27 37 683 offenbart eine Schneidvorrichtung in einem Feldhäcksler mit einer geschlossenen Vielmessertrommel, wobei sich die Messer jeweils nur über einen Teil der Breite der Vielmessertrommel erstrecken. Jedes Messer wird reibschlüssig auf einem winkelförmigen Messerhalter auf der Umfangsfläche der Vielmessertrommel gehalten und erstreckt sich glatt in einer Ebene. Die Messerhalter verschiedener Ringreihen sind umfangsmäßig zueinander versetzt angeordnet, so daß die Messer nacheinander auf zu schneidendes Gut auftreffen.

Aus der US-A-4,011,998 geht eine weitere Schneidvorrichtung hervor, deren glatte Messer in mehreren Ringreihen auf scheibenartigen Trägern gehalten sind - es handelt sich somit um eine offene Bauweise. Die Messer können derart auf die Träger aufgesetzt sein, daß sich ihre Schnittkante entweder parallel oder geneigt zu der Drehachse des Rotors erstreckt. Die Ausrichtung der Schnittkante der Messer in Bezug auf die Drehachse ergibt sich aus der Form bzw. Anordnung von Messerhaltern an den Trägern.

Gemäß der DE-AS-1 116 464 sind ebene Messer einer Häckseltrommel ungleichmäßig trapezförmig ausgebildet und an Tragscheiben eines Rotors festgelegt.

Der Prospekt "TAARUP 406, Fine Chop Forage Harvester" zeigt einen Häckselrotor mit einer geschlossenen Trommel auf deren Umfangsfläche Messerhalter derart aufgeschweißt sind, daß die Schnittkante der von ihnen getragenen Messer mit Bezug auf die Drehachse des Häckselrotors schräg verläuft.

Nach der US-A-3,805,660 ist eine ebenfalls in offener Bauweise ausgeführte Häckseltrommel mit in sich gewundenen Häckselmessern bestückt, die sich über die gesamte Breite der Häckseltrommel erstrecken.

Das der Erfindung zugrundeliegende Problem wird darin gesehen, ein Häckselmesser bzw. eine mit Häckselmessern zu bestückende Häckseltrommel zu entwerfen, die eine geringe Leistungsaufnahme erfordern und günstig zu realisieren sind.

Diese Aufgabe wird erfindungsgemäß durch die Lehre des Patentanspruchs 1 bzw. 5 gelöst, wobei in den jeweils weiteren Patentansprüchen Merkmale aufgeführt sind, die die Lösung in vorteilhafter Weise weiterentwickeln.

Auf diese Weise entsteht ein Messer, das bei entsprechender Montage auf einem z. B. aus DE-C2-27 37 683 bekannten Häckselrotor zu einem ziehenden Schnitt führt, was den Leistungsbedarf reduziert. Eine kostengünstige Herstellung ergibt sich dadurch, daß dieses Häckselmesser nicht in sich gewunden ist, sondern aus einem Flachstahl durch Kröpfen d.h. zweifaches gegensinniges Biegen bzw. Tordieren an entlang einer Linie gefertigt wird. Ein derartiges Häckselmesser kann ohne weiteres auf eine Häckseltrommel mit parallel zu der Drehachse ausgerichteten Messerhalter aufgesetzt werden, bzw. eine solche Häckseltrommel ist bei entsprechender Aufnahme der Häckselmesser geeignet, die Erfindung zu verwirklichen. Das bekannte schräge Aufsetzen von Messerhaltern auf einen Trommelmantel ist nur schwierig durchzuführen. Hingegen sind gekröpfte Häckselmesser oder keilförmige Distanzstücke zwischen Häckselmesser und Messerhalter leicht und in Massenfertigung herzustellen. Positiv auf den Leistungsbedarf wirkt sich auch die geschlossene Bauweise des Häckselrotors aus.

Die Verwendung von Längsschlitzen in dem Befestigungsflansch der Häckselmesser oder analog in den Messerhaltern läßt eine Verschiebung der Häckselmesser entweder für Wartungszwecke oder beim Auftreffen auf einen Fremdkörper gegenüber der Trommel zu.

Die seitliche Bewegung eines zu schneidenden Erntegutstengels beim Auftreffen des Häckselmessers wird kontrollierbar, wenn die Häckselmesser dachförmig abgekröpft oder in einer der genannten Ausrichtungen auf dem Häckselrotor befestigt sind.

Eine Divergenz der beiden Grundkanten des Häckselmessers um ca. 2° - 12° insbesondere aber 7° vor der Formgebung ist schmiedetechnisch durchzuführen und läßt die Anwendung herkömmlicher Schleifapparate zum Schleifen der Messer bei drehendem Häckselrotor zu.

In der Zeichnung ist ein nachfolgend näher beschriebenes Ausführungsbeispiel der Erfindung dargestellt. Es zeigt:
- Fig. 1: einen Häckselrotor mit Häckselmessern in Seitenansicht,
- Fig. 2: den Häckselrotor mit Häckselmessern in Vorderansicht,
- Fig. 3: eine vergrößerte Darstellung eines Häckselmessers im Bereich seiner Befestigung auf dem Häckselrotor,
- Fig. 4: das Häckselmesser in Seitenansicht und
- Fig. 5 bis 10: unterschiedliche Anordnungen der Häckselmesser auf dem Häckselrotor.

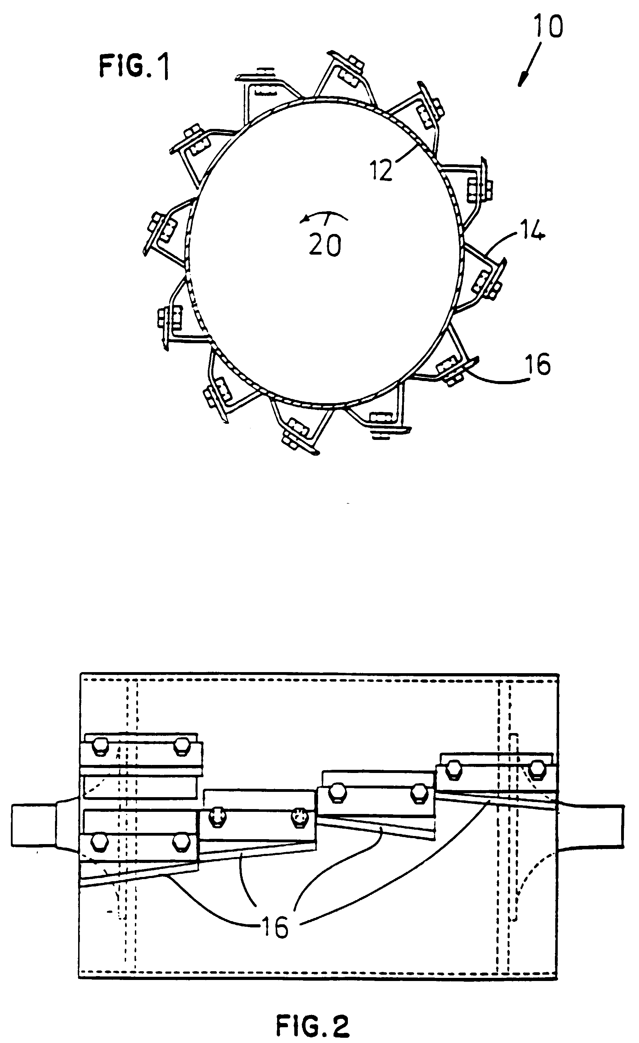

Gemäß Figur 1 enthält ein erfindungsgemäßer Häckselrotor 10 eine geschlossene rohrförmige Trommel 12, deren Längsmittenachse zugleich ihre Drehachse darstellt. Auf die Trommel 12 sind winkelförmige Messerhalter 14 aufgesetzt und an ihren jeweiligen Endkanten mit deren Mantelblech verschweißt. Die Anordnung der Messerhalter 14 ist so getroffen, daß diese sich parallel zu der Drehachse des Häckselrotors 10 erstrecken, wobei gemäß Figur 2 die Messerhalter 14 in mehreren Ringreihen untergebracht und gegeneinander umfangsmäßig versetzt sind.

Erfindungsgemäße Häckselmesser 16 sind derart verschieden auf eine nacheilende Fläche der Messerhalter 14 aufgesetzt, daß sie mit einem vorderen Trennbereich 18 über diese überstehen und somit bei einer Drehung des Häckselrotors 10 gemäß dem Pfeil 20 auf einer nicht gezeigten Gegenschneide aufliegendes Erntegut abschneiden. Die Häckselmesser 16 können anders als in den Figuren 1 bis 3 gezeigt bei entsprechender Ausbildung auch an der voreilenden Fläche des Messerhalters 14 angebracht werden.

Das Häckselmesser 16 setzt sich aus einem Befestigungsflansch 22 und dem Trennbereich 18 einstückig zusammen. Während der voreilende Teil des Trennbereichs 18 in einer Schnittkante 24 ausläuft, erstrecken sich von der nacheilenden Kante des Befestigungsflansches 22 in Richtung zu dem Trennbereich 18 Längsschlitze 26, die der Aufnahme von Schrauben 28 dienen. Die Befestigung der Häckselmesser 16 auf dem Messerhalter 14 erfolgt durch Anlage eines oder mehrerer Schraubenköpfe 30 auf dem Befestigungsflansch 22 und durch Spannen der den Messerhalter 14 durchdringenden Schraube 28 mittels einer Mutter 32 innerhalb des Freiraums des Messerhalters 14.

Der bisher beschriebene Häckselrotor 10 und die Befestigung des Häckselmesser 16 auf diesem entspricht dem in der DE-C2-27 37 683 beschriebenen, auf deren Offenbarung ergänzend hierzu Bezug genommen wird.

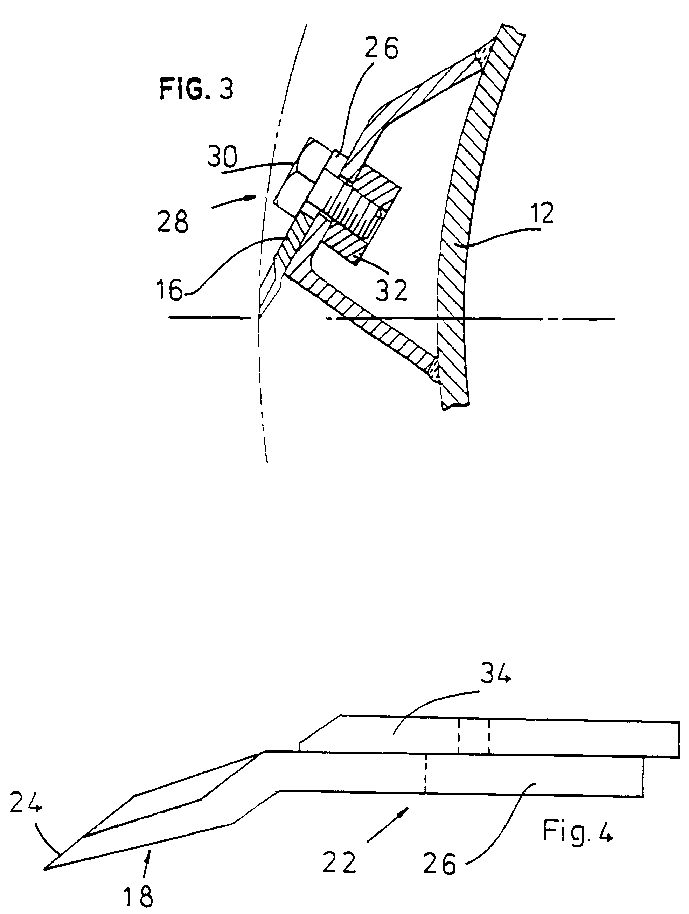

Aus Figur 4 wird die gegenüber dem Häckselmesser nach der DE-C2-27 37 683 unterschiedliche Ausbildung des erfindungsgemäßen Häckselmessers 16 deutlich. Gemäß dieser Darstellung ist der Trennbereich 18 gegenüber dem Befestigungsflansch 22 geringfügig nach unten gekröpft und tordiert. Um diese Form zu erreichen wird der Trennbereich 18 als ein ungleichförmiges Trapez ausgebildet, dessen dem Betrachter zugelegene Seite länger ist als die ihm abgelegene. Die Divergenz, d. h. der Winkel, zwischen der vorderen Kante des Trennbereichs 18 und dessen rückwärtiger Kante, die parallel zu den Längskanten des Befestigungsflansches 22 verläuft, beträgt ca. 7°, kann aber in einem Bereich von ca. ± 5° geändert werden. Diese Formgebung läßt es zu, die Häckselmesser 16 im montierten Zustand bei drehendem Häckselrotor 10 mit einer herkömmlichen Schleifvorrichtung zu schleifen. Die Tordierung bzw. Kröpfung des Trennbereichs 18 gegenüber dem Befestigungsflansch 22 kann um eine Mittenlinie des Häckselmessers 16 herum oder um eine der Seitenkanten herum erfolgen.

Anders als zuvor beschrieben kann die längere Seitenkante an der dem Betrachter abgelegenen Seite des Häckselmessers 16 vorgesehen sein, d. h. es können sog. linke und rechte Häckselmesser 16 hergestellt werden.

Des weiteren können auch Häckselmesser 16 in Dach- oder V-Form gebildet werden, deren Seitenkanten jeweils gleich lang sind, während sie in einem Mittenbereich länger oder kürzer sind. Bei dieser Form eines Häckselmessers 16 werden die beiden seitlich der Mittellinie gelegenen dreiecksförmigen Bereiche abgekröpft bzw. tordiert.

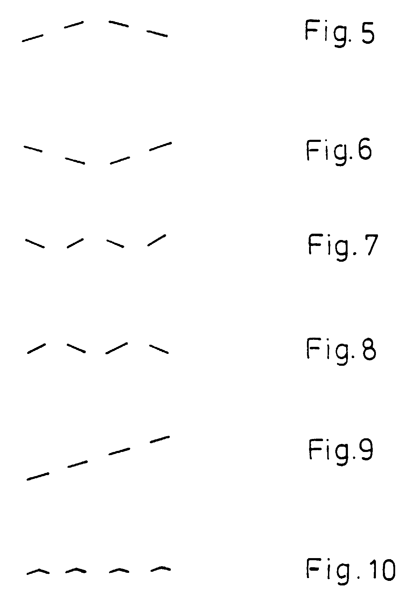

Die Anordnung der Häckselmesser 16 auf den Messerhaltern 14 kann wie in den Figuren 5 bis 10 schematisch gezeigt erfolgen. Danach können sich bei vier nebeneinander gelegenen Ringreihen insbesondere:
a) die Schnittkanten 24 aller Häckselmesser 16 in einer Richtung,
b) die Schnittkanten 24 der Häckselmesser 16 jeder zweiten Reihe in der gleichen Richtung und abwechselnd,
c) die Schnittkanten 24 in der Form eines einzigen "V" oder "/\" bei zwei linken Häckselmessern 16 links und zwei rechten Häckselmessern 16 rechts einer Mittenlinie,
d) die Schnittkanten 24 doppel-V-förmig oder doppel-/\-förmig mit jeweils einem Paar linker und rechter Häckselmesser 16
erstrecken.

Darüberhinaus können in jeder Ringreihe ausschließlich in sich dachförmig oder V-förmig ausgebildete Häckselmesser 16 vorgesehen werden.

Wahlweise können zwischen die Schraubenköpfe 30 und die Häckselmesser 16 auch Versteifungsplatten 34 eingefügt werden, die eine noch festere Anlage der Häckselmesser 16 auf dem Messerhalter 14 bewirken.

## Patentansprüche

1. Häckselmesser (16) mit einem Befestigungsflansch (22) und einem Trennbereich (18), der in einer Schnittkante (24) ausläuft, dadurch gekennzeichnet, daß der Trennbereich (18) als ungleichförmiges Trapez mit unterschiedlich langen an die Schnittkante (24) angrenzenden Seiten ausgebildet und gegenüber der Ebene des Befestigungsflansches (22) zweifach gegensinnig gebogen und/oder tordiert ist.

2. Häckselmesser nach Anspruch 1, dadurch gekennzeichnet, daß zwei Trennbereiche (18) von ungleichförmiger Trapezform nebeneinander angeordnet sind, wobei die langen Seitenkanten außen oder innen gelegen sind.

3. Häckselmesser nach Anspruch 1 oder 2, dadurch gekennzeichnet, daß der Befestigungsflansch (22) einseitig offene Längsschlitze (26) zur Aufnahme von Schrauben (28) aufweist.

4. Häckselmesser nach einem oder mehreren der vorherigen Ansprüche, dadurch gekennzeichnet, daß im nicht verformten Zustand die Schnittkante (24) mit einer Divergenz von 2° bis 12°, vorzugsweise ca. 7° gegenüber der ihr gegenüberliegenden Endkante des Befestigungsflansches (22) verläuft.

5. Häckselrotor (10) mit einer geschlossenen Trommel (12) und auf deren Mantelfläche in mehreren Ringreihen parallel zu der Drehachse der Trommel (12) aufgesetzten Messerhaltem (14), dadurch gekennzeichnet, daß die Messerhalter (14) Häckselmesser (16) tragen, deren Schnittkanten (24) mit Bezug auf die Drehachse des Häckselrotors (10) schräg verlaufen.

6. Häckselrotor nach Anspruch 5, dadurch gekennzeichnet, daß die Häckselmesser (16) nach einem oder mehreren der Ansprüche 1 bis 4 ausgebildet sind.

7. Häckselrotor nach Anspruch 5, dadurch gekennzeichnet, daß eben ausgebildete Häckselmesser (16) verwendet werden und zwischen die Häckselmesser (16) und die Messerhalter (14) keilförmige Distanzhalter eingefügt sind.

8. Häckseltrommel nach Anspruch 6 oder 7, dadurch gekennzeichnet, daß die Häckselmesser (16) nebeneinander liegender Ringreihen in V-Form, auf dem Kopf stehender V-Form, in Doppel-V-Form oder in einer Richtung ausgerichtet sind.

## Claims

1. Chaff cutter (16) having an attachment flange (22) and a separating region (18) which becomes a cutting edge (24), characterised in that the separating region (18) is formed as a non-uniform trapezium having sides of different length adjacent to the cutting edge (24) and is bent and/or twisted in a two-fold manner in opposite directions with respect to the plane of the attachment flange (22).

2. Chaff cutter according to claim 1, characterised in that two separating regions (18) in a non-uniform trapezoidal shape are disposed adjacent to each other, wherein the long lateral edges are positioned externally or internally.

3. Chaff cutter according to claim 1 or 2, characterised in that the attachment flange (22) comprises longitudinal slots (26) which are open on one side for the purpose of receiving screws (28).

4. Chaff cutter according to one or several of the preceding claims, characterised in that in the non-deformed state the cutting edge (24) extends with a divergence of 2° to 12°, preferably ca. 7° with respect to the end edge of the attachment flange (22) lying opposite the said cutting edge.

5. Chaff cutter drum (10) having a closed drum (12) and cutter holding devices (14) which are attached on the peripheral surface thereof in a plurality of annular rows in parallel with the rotational axis of the drum (12), characterised in that the cutter holding devices (14) support chaff cutters (16), whose cutting edges (24) extend in an inclined manner with respect to the rotational axis of the chaff cutter drum (10).

6. Chaff cutter drum according to claim 5, characterised in that the chaff cutters (16) are formed according to one or several of the claims 1 to 4.

7. Chaff cutter drum according to claim 5, characterised in that planar chaff cutters (16) are used and wedge-shaped spacers are inserted between the chaff cutters (16) and the cutter holding devices (14).

8. Chaff cutter drum according to claim 6 or 7, characterised in that the chaff cutters (16) of adjacent annular rows are aligned in a V-shape, on the head of a vertical V-shape, in a double-V-shape or in one direction.

## Revendications

1. Couteau de hache-paille (16) comportant une pièce de fixation (22) et une partie de coupe (18) qui se termine par une arête de coupe (24), caractérisé en ce que la partie de coupe (18) est agencée sous la forme d'un trapèze non régulier possédant des côtés jouxtant l'arête de coupe (24), qui ont des longueurs différentes, et est coudée et/ou tordue doublement en des sens opposés par rapport au plan de la pièce de fixation (22).

2. Couteau de hache-paille selon la revendication 1, caractérisé en ce que deux parties de coupe (18) ayant une forme de trapèze irrégulier sont disposées côte-à-côte, les grandes arêtes latérales étant disposées sur le côté extérieur ou sur le côté intérieur.

3. Couteau de hache-paille selon la revendication 1 ou 2, caractérisé en ce que la pièce de fixation (22) comporte des fentes longitudinales (26) ouvertes d'un côté, servant à loger des vis (28).

4. Couteau de hache-paille selon une ou plusieurs des revendications précédentes, caractérisé en ce qu'à l'état non déformé, l'arête de coupe (24) s'étend en présentant une divergence de 2° à 12°, de préférence égale à environ 7°, par rapport au bord d'extrémité, situé à l'opposé, de la pièce de fixation (22).

5. Rotor de coupe (10) comportant un tambour fermé (12) et, sur la surface enveloppe de ce tambour, des porte-couteaux (14) disposés suivant plusieurs rangées annulaires parallèlement à l'axe de rotation du tambour (12), caractérisé en ce que les porte-couteaux (14) portent des couteaux de hache-paille (16), dont les arêtes de coupe (24) s'étendent obliquement par rapport à l'axe de rotation du rotor de coupe (10).

6. Rotor de coupe selon la revendication 5, caractérisé en ce que les couteaux de hache-paille (16) sont agencés selon une ou plusieurs des revendications 1 à 4.

7. Rotor de coupe selon la revendication 5, caractérisé en ce qu'on utilise des couteaux de hache-paille (16) configurés avec une forme plane et que des entretoises en forme de coins sont insérées entre les couteaux de hache-paille (16) et les porte-couteaux (14).

8. Tambour de coupe selon la revendication 6 ou 7, caractérisé en ce que les couteaux de hache-paille (16) de rangées annulaires, disposées côte-à-côte, sont orientés selon une disposition en V, en V renversé, en V double ou dans une autre direction.
